# EUROPEAN PATENT APPLICATION

(11) **EP 1 873 090 A1**
(43) Date of publication of application: **02.01.2008**
(21) Application number: 06013585.2
(22) Date of filing: 30.06.2006
(51) Int. Cl.: B65G 47/32, B65G 47/88

(54) **Method of spacing items in article handling systems**

(71) Applicant: SIEMENS AKTIENGESELLSCHAFT, 80333 München (DE)
(72) Inventor: Berdelle-Hilge, Peter, 78464 Konstanz (DE)
(74) Representative: Hellebrandt, Martin

(57) **Abstract**

A method of spacing a predetermined number of items (P1-P5) in a predetermined manner moves the items (P1-P5) along a path towards each other to minimize distances between the items (P1-P5). A positioning mechanism (4) having a conveyor belt (6) engages with each item (P1-P5). The positioning mechanism (4) together with the engaged items (P1-P5) is moved in a first direction for a first predetermined distance along the path. The positioning mechanism (4) is activated so that the conveyor belt (6) moves the items (P1-P5) in a second direction, which is opposite to the first direction. While the positioning mechanism (4) is active, the positioning mechanism (4) is moved for a second predetermined distance that corresponds to a width of an item (P1-P5) to be positioned. The item (P1-P5) to be positioned is disengaged from the positioning mechanism (4).

## Description

### Background of the Invention

The various embodiments described herein generally relate to positioning items. More particularly, the various embodiments relate to a method and system for spacing items in a predetermined manner within handling systems. The handling system may include applications in postal automation with the items to be spaced being mail containers and the like.

In various applications, for example, article handling systems, the throughput and the efficiency of article handling systems may be substantially improved if more than one article is handled simultaneously. For example, a stationary processing station may pick up several articles, at the same time, from a conveying system transporting the articles to the processing station. Some systems require that the articles are equally spaced from each other to enable simultaneous handling. Other systems may require that the articles are not equally spaced from each other, for example, because different handling devices are used.

In these systems, the conveying system may have platforms, slots or containers, which do not move with respect to each other and are equally spaced, to transport the articles. Alternatively, the conveying system may have a plurality of transport devices that move independently from each other on a track system to and from the processing station. The transport devices may be individually controlled to provide for the required equal spacing of the article carrying platforms, slots or containers at the processing station. However, individually controlling the transport devices is time Consuming, requires more effort and, as such, slows down the handling process.

### Summary of the Invention

It is an objective of the present invention to improve the handling of articles without individually controlling the transport devices at a processing station. It is a further object to provide a method and apparatus that allow more flexibility as to the spacing between neighboring items.

Accordingly, one aspect involves a method of spacing a predetermined number of items in a predetermined manner. The method moves the items along a path towards each other to minimize distances between the items. A positioning mechanism engages with each item and moves together with the engaged items in a first direction for a first predetermined distance along the path. The item to be positioned is disengaged from the positioning mechanism. The positioning mechanism moves together with the remaining items in the first direction for a predetermined distance. The steps of moving and disengaging are repeated until all items are placed with a predetermined spacing between neighboring items.

Another aspect involves an apparatus for spacing a predetermined number of items along a first path having a conveying system movably mounted to a guide. The conveying system is configured to engage with each item, to move together with the engaged items in a first direction for a first predetermined distance along the path, to disengaging the item to be positioned, and to move together with the remaining items in the first direction for a predetermined distance, until all items are placed with a predetermined spacing between neighboring items.

Advantageously, the various embodiments described herein do not require an individual articulation of the items to space them in a predetermined manner. Instead, the mechanism acts as an actuator that sequentially positions all items at a predetermined distance with respect to a neighboring item. In addition, the mechanism positions the items at various predetermined pitches regardless of whether the items are to be equally spaced or not. After use, the mechanism is completely removable from the items.

### Brief Description of the Several Views of the Drawings

These and other aspects, advantages and novel features of the embodiments described herein will become apparent upon reading the following detailed description and upon reference to the accompanying drawings. In the drawings, same elements have the same reference numerals.
Figure 1 shows a schematic overview of an exemplary arrangement of items movable along a path;
Figure 2 illustrates the arrangement of Figure 1 in an initial position;
Figure 3 illustrates one embodiment of a positioning mechanism for coupling to the arrangement in the initial position shown in Figure 1;
Figure 4 illustrates the positioning mechanism of Figure 3 coupled to the arrangement in the initial position; and
Figures 5 - 9 illustrates various positions of the positioning mechanism during positioning items P1 and P2.

### Detailed Description of Certain Inventive Embodiments

The certain inventive embodiments described hereinafter generally position items in a desired manner, for example, so that neighboring items are equally or not equally spaced. As used throughout the application items refer to devices, vehicles, articles, pieces, objects or the like that are movable, for example, along a path. It is however contemplated that other items, as would be imagined by one skilled in the art, may be included in the definition of items. Further, it is contemplated that positioning such items may include positioning carriers or platforms that hold and/or carry these items. One exemplary application of these embodiments is in a system (e.g., a mail processing system) that handles such items.

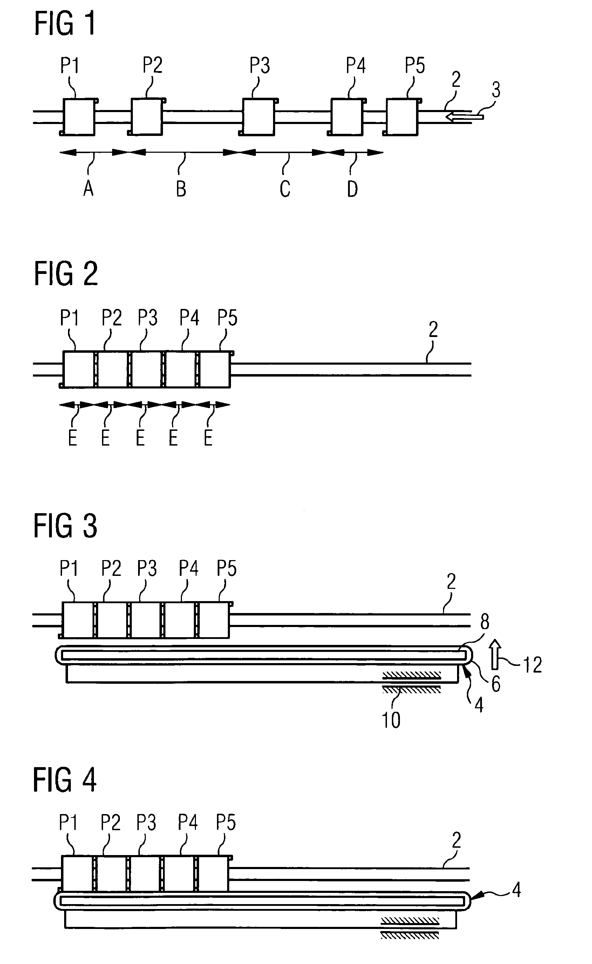

Figure 1 shows a schematic overview of an exemplary arrangement of items Pᵢ, i = 1, 2, ..., that are movable along a track 2, for example, of a transport system. For illustrative purposes, Figure 1 shows five items P1, P2, P3, P4, P5. However, it is contemplated that the number of items Pᵢ may be variable depending on a particular application.

The items P1-P5 are in one embodiment randomly spaced at pitches A, B, C and D. That is, the pitch between item P1 and item P2 is A, the pitch between item P2 and item P3 is B, the pitch between item P3 and item P4 is C, and the pitch between item P4 and item P5 is D. The pitches A, B, C and D may be determined by the time an item P1-P5 arrives at a processing station. It is contemplated that instead of defining a pitch between items, a distance between items may be defined.

Figure 2 illustrates the arrangement of Figure 1 in an initial position. In this initial position, the distances between the items P1-P5 have been minimized by moving, for example, pushing the items P1-P5 together, as indicated by an arrow 3. In the illustrated embodiment, a distance exists between two neighboring items P1-P5. For an exemplary application, the distance may be substantially zero. As depicted, E is the minimum possible pitch.

Figure 3 illustrates one embodiment of a positioning mechanism 4 for coupling to the arrangement in the initial position shown in Figure 1. The positioning mechanism 4 includes a conveying system having a driven conveyor belt 6 and a belt support 8. The conveying system is movable mounted to a guide 10. In the illustrated embodiment, the positioning mechanism 4 is located underneath the items P1-P5. It is contemplated that in a particular implementation the positioning mechanism 4 may be located underneath or at a side of the items P1-P5. In the illustrated embodiment, the positioning mechanism 4 is moveable towards the items P1-P5, as indicated by an arrow 12, to engage with the items P1-P5. The conveyor belt 6 has a working length, which is about half of the belt's closed loop length, that is equal or longer than a total thickness of all items P1-P5.

The belt support 8 is configured to support and drive the conveyor belt 6. It includes, for example, installations that support, guide and rotate the closed-loop conveyor belt 6, a drive motor and a control unit. The control unit activates and deactivates the drive motor depending on the desired spacing of the items P1-P5.

The guide 10 supports the belt support 8 and allows the belt support 8 to move with respect to the guide 10. It is contemplated that in Figs. 3-9 the guide 10 is shown schematically to illustrate its principal operation. The guide 10 may be equipped with a drive that moves the belt support 8 upon activation.

Figure 4 illustrates the positioning mechanism 4 being in engagement with the arrangement of items P1-P5. All items P1-P5 are positioned along the working length of the conveyor belt 6. The engagement is in one embodiment through physical contact, for example, by means of coupling devices or friction between the items P1-P5 and the conveyor belt 6.

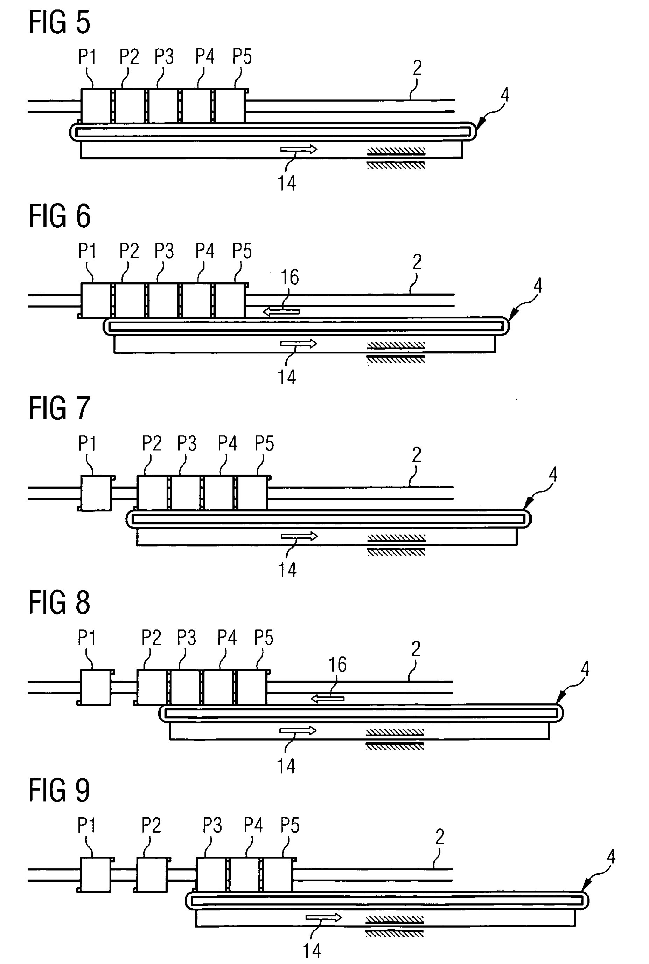

Figure 5 illustrates moving the positioning mechanism 4 and the coupled items P1-P5 essentially parallel to the track 2 until the predetermined position of the first item P1 is reached, as indicated by an arrow 14. In Figure 5, as well as in Figures 6-9, the positioning mechanism 4 moves from left to right, as indicated by the arrow 14. The conveyor belt 8 is not activated and the positioning mechanism 4 alone moves the items P1-P5.

Figure 6 illustrates moving the positioning mechanism 4 further for the width of the first item P1. At the same time, the conveyor belt 6 is activated to rotate counterclockwise, i.e., opposite to the direction of movement of the positioning mechanism 4, as indicated by an arrow 16. By this process, item P1 is disengaged from the conveyor belt 6.

Figure 7 illustrates that the first item P1 is positioned at the predetermined position. The remaining items P2-P5 are still in engagement with the positioning mechanism 4.

Figures 8 and 9 illustrate positioning of the second item P2, which occurs in the same way as the positioning of the first item P1. The second item P2 is positioned at a predetermined distance from the first item P1.

The remaining items P3-P5 can be placed in the same manner by repeating the above-described steps. In one embodiment, the items P1-P5 may be positioned as shown in Figure 1. However, it is contemplated that the items P1-P5 may be positioned at any pitch or distance from each other. If all items P1-P5 are positioned, the positioning mechanism 4 is returned to its idle position (Figure 3).

In another embodiment, the positioning mechanism 4 moves all items P1-P2 parallel to the track 2 until the first item P1 is at the predetermined position of the first item P1. The positioning mechanism 4 is then moved away from the items P1-P5, i.e., the positioning mechanism 4 disengages the items P1-P5. The positioning mechanism 4 is then moved for the width of the first item P1. The first item P1 is then positioned. The positioning device 4 is again moved towards the items to engage the remaining items P2-P5. The positioning device 4 moves the items P2-P5 until the second item P2 is at the predetermined position of the second item P2. The process of engaging, moving and disengaging is repeated until all items are placed as desired. In that embodiment, the positioning mechanism 4 does not activate the conveyor belt 8, if available. However, it is contemplated that in this embodiment the positioning mechanism 4 does not have a conveyor belt.

The apparatus and method for placing items P1 - P5, as described with reference to Figures 1-9, may be used in a mail processing system, which is one example of an article handling system. Such a system may process articles for delivery to millions of individual domestic addresses. Articles may include mail items, magazines, books and other items usually transported by a postal service. A mail processing system at a processing site sorts all articles for the carriers and packages the sorted articles for each domestic address. The mail processing system is highly automated to handle the amount of daily articles. It may include a delivery point packaging (DPP) system that, for example, separates the articles, reads their destination addresses and groups the articles based upon their respective destination addresses. One example of a DPP system includes an arrangement of a multitude of individual pockets or slots for individual articles. A transport system transports the articles along a track system to the slots. Feeders insert the articles into the transport system at loading points. At this point, the destination address of an article is known and the transport system transports the article along a delivery path to a slot that is pre-assigned to the destination address of that article.

During the replenishment process of the sorting pockets with bags, the partitions (items) should be spaced equally before being lowered in the replenishment device. Therefore, all partitions that are to be replenished are pushed together so that the distance between the partitions is minimized, as illustrated in Figure 2. The positioning mechanism 4 is coupled to each partition, as illustrated, for example, in Figure 4. The positioning mechanism 4 is then activated as described above with reference to Figures 5-9. After that, the partitions have the desired spacing as the bags in which the partitions will be lowered.

It is apparent that there has been disclosed a system and method for spacing translatable items within article handling systems that fully satisfy the objects, means, and advantages set forth hereinbefore. While specific embodiments of the system and method have been described, it is evident that many alternatives, modifications, and variations will be apparent to those skilled in the art in light of the foregoing description.

## Claims

1. A method of spacing a predetermined number of items (P1-P5) along a first path, comprising:
moving the items (P1-P5) along a path towards each other to minimize distances between the items (P1-P5) ;
engaging a positioning mechanism (4) with each item (P1-P5;
moving the positioning mechanism (4) together with the engaged items (P1-P5) in a first direction for a first predetermined distance along the path;
disengaging the item (P1) to be positioned from the positioning mechanism (4); and
repeating the steps of moving and disengaging until all items (P1-P5) are placed with a predetermined spacing between neighboring items.

2. The method of Claim 1, further comprising:
activating the positioning mechanism (4) so that the items (P1-P5) move in a second direction, which is opposite to the first direction; and
while the positioning mechanism (4) is active, moving the positioning mechanism (4) for a second predetermined distance that corresponds to a width of an item (P1-P5) to be positioned.

3. The method of Claim 2, wherein activating the positioning mechanism (4) so that the items (P1-P5) move in a second direction includes activating a conveyor belt (8).

4. The method of Claim 1, further comprising:
disengaging the remaining items (P2-P5) in addition to the item (P1) to be positioned from the positioning mechanism (4);
moving the positioning mechanism (4) for the width of the item (P1) to be placed;
engaging the remaining items (P2 - P5) ; and
moving the positioning device (4) until the next item (P2) to be positioned is at a predetermined position of the second item (P2).

5. The method of any preceding claim, wherein engaging the positioning device (4) with the items (P1-P2) includes moving the positioning device (4) towards the items (P1-P5).

6. An apparatus for spacing a predetermined number of items (P1-P5) along a first path, comprising a conveying system (6, 8) movably mounted to a guide (10), wherein the conveying system (6, 8) is configured to engage with each item (P1-P5), to move together with the engaged items (P1-P5) in a first direction for a first predetermined distance along the path, to disengaging the item (P1) to be positioned, and to move together with the remaining items (P2-P5) in the first direction for a predetermined distance, until all items (P1-P5) are placed with a predetermined spacing between neighboring items.

7. The apparatus of Claim 6, wherein the conveying system (6, 8) includes a conveyor belt (6) configured to move the items (P1-P5) in a second direction, which is opposite to the first direction.
